# EUROPEAN PATENT SPECIFICATION

(11) **EP 0 964 163 B1**
(45) Date of publication and mention of the grant of the patent: **16.11.2005**
(21) Application number: 99304562.4
(22) Date of filing: 10.06.1999
(51) Int. Cl.: F15B 13/04

(54) **Valve for hydraulic power units**
Ventil eines hydraulischen Aggregats
Soupape pour une centrale hydraulique

(30) Priority: 10.06.1998 IT RM980377
(43) Date of publication of application: 15.12.1999
(73) Proprietor: OTIS ELEVATOR COMPANY, Farmington, CT 06032 (US)
(72) Inventor: Foschini, Gianluca, 48016 Cervia (Ravenna) (IT)
(74) Representative: Leckey, David Herbert

(56) References cited:
- DE-U- 8 311 997
- US-A- 3 813 079
- US-A- 3 908 698
- US-A- 4 024 891
- US-A- 4 617 963
- US-A- 4 844 701
- PATENT ABSTRACTS OF JAPAN vol. 1996, no. 03, 29 March 1996 (1996-03-29) & JP 07 301201 A (TOYOOKI KOGYO CO LTD), 14 November 1995 (1995-11-14)

## Description

The invention concerns an improved hydraulic power unit, particularly for elevators, hoists, and the like. More specifically, the invention concerns a unit having valves that permits significant reduction in the noise of hydraulic power units in the above-mentioned equipment.

The hydraulic power unit is currently the key factor as far as noise in elevators is concerned. This type of problem is particularly troublesome in the case of power units located near bedrooms, living rooms, or in such structures as hotels, hospitals, etc.

Studies conducted have shown that noise from this type of equipment is due primarily to either the pump when the elevator is ascending, or to the cavitation of oil in the slide valve when the elevator is ascending or descending.

In light of the above, the applicant has researched a solution which would significantly reduce noise emissions from the hydraulic power unit.

The main purpose of the invention is to provide an improved hydraulic unit that reduces the noise caused by oil cavitation and turbulence during operation.

Another purpose of the invention, at least in preferred embodiments is to provide a solution that permits the noise from the pump to be confined to inside the case or housing.

These and other results are obtained according to at least the preferred embodiment the invention, which proposes a technical solution that reduces the likelihood of oil cavitation as it passes through the valve itself, as well as a technical solution for soundproofing the internal area or the valve housing.

Various valve constructions are disclosed in DE-U-8311997.3, US-A-3813079, US-A-3908698, US-A-4617963, US-A-4024891 and JP 7301201.

According to the invention there is provided a hydraulic power unit as claimed in claim 1.

The particular size, number and shape of the holes in the valve body side walls will depend on the particular application, as will be explained below. However, what is important is that the effective diameter of the holes should be as small in dimension as possible, thereby reducing the Reynolds number of the flow therethrough, without compromising the hydraulic performance of the apparatus in which the valve is used. In general the optimum hole size will be determined by specific study and verified empirically.

The holes in the valve body may be slots that are generally rectangular in form, circular or indeed some other shape. However, slots and circular holes are the most easily manufactured. As stated above the particular form of the valve and the number and shape of the holes will vary with the function of the pump in the hydraulic power unit. The slots may have a different width and the circular holes a different diameter depending on the flow rate. Preferably the slots are up to about 7 mm wide and the holes up to about 5 mm in diameter. In typical applications at typical flow rates, a rectangular slot may have a width between 1 and 5 mm, depending on flow rate, preferably between 2 and 4 mm. A circular hole may have a diameter of between 1 and 3 mm, preferably between 1 and 2 mm more preferably between 1.2 and 1.7 mm.

The thickness of the valve side walls should preferably be as thin as possible without compromising the strength of the valve.

According to a preferred embodiment of the invention, the control valve will be contained in a soundproof compartment. The soundproofing of that compartment, according to the invention, will preferably be realized by the use of padded sheets of sound-absorbing or sound-insulating material.

Some preferred embodiments of the invention will now be described by way of example only, with reference to the accompanying drawings in which:
Figure 1 is a perspective view of a hydraulic power unit in accordance with the invention;
Figure 2 is a perspective view of the set of valves in the power unit of Figure 1;
Figure 3 is a schematic diagram of the power unit of Figure 1;
Figure 4 is a cross section of one embodiment of a valve for use in a unit as described in Figures 1 to 3;
Figure 5 is a cross section of a second embodiment of a valve for use in a unit as described in Figures 1 to 3; and
Figure 6 is an overall view of the power unit of Figure 1.

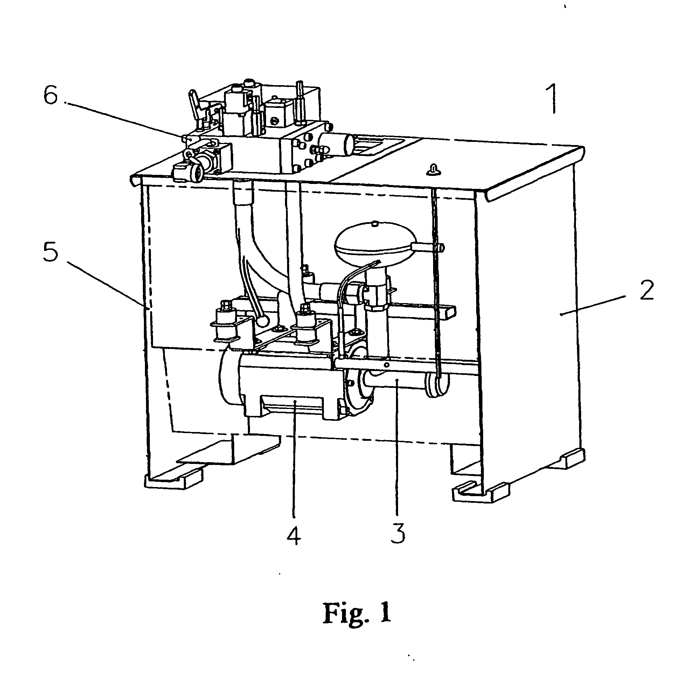

Figure 1 of the attached drawings shows a hydraulic power unit, indicated generally by reference number 1, comprising a pump 3, a motor 4, a tank 5, and a valve block 6, all inside a housing 2.

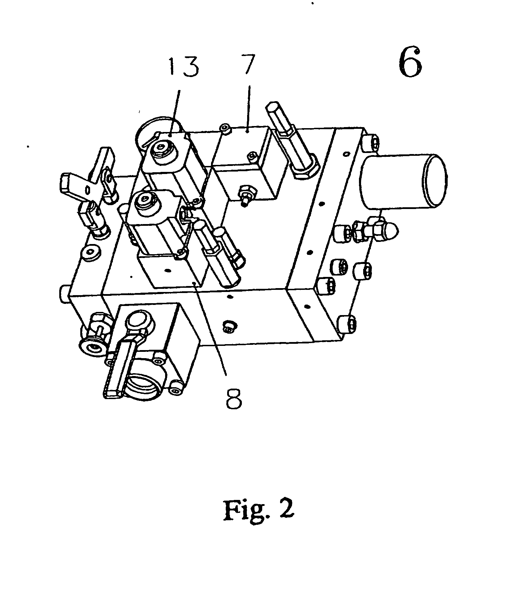

The valve block 6 is illustrated in greater detail in Figure 2, which shows a control valve 7 to control a starter valve (not shown), and a solenoid 8 to control a non-return valve (not shown) which are both constructed according to the teaching the invention.

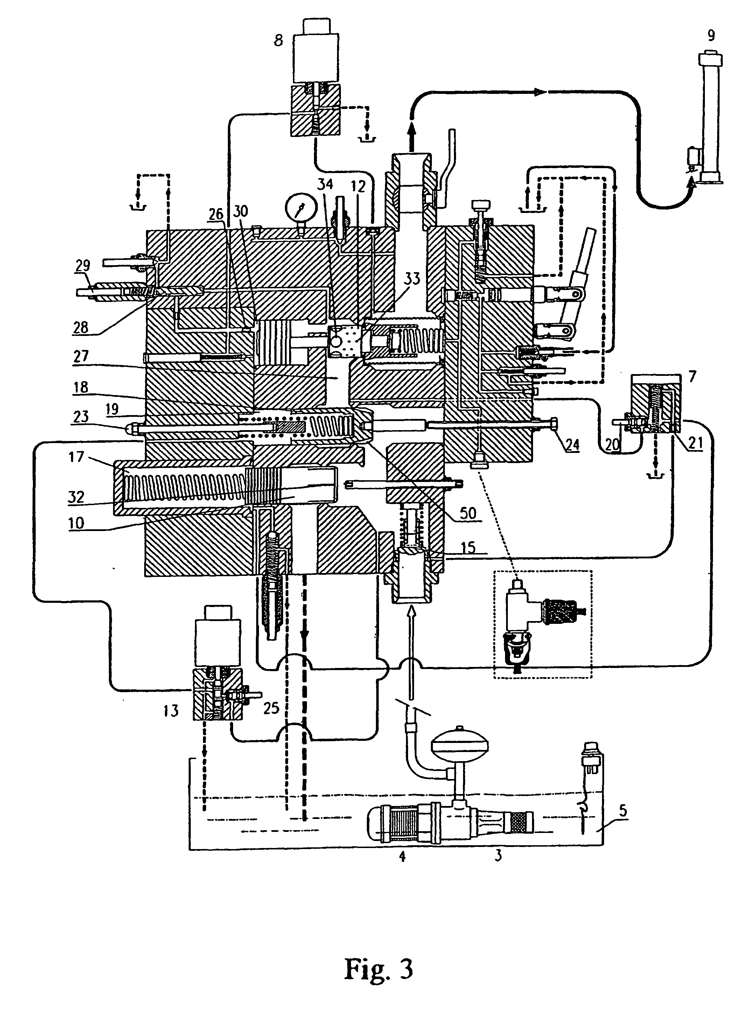

Figure 3 shows a schematic diagram of power unit 1 of the invention, with valve block 6 shown in cross section. In particular, this figure shows the passage of the oil from the motor 4-pump 3 unit to a piston 9, via the valve block 6.

The various phases of movement of the elevator (bypass, acceleration, constant-velocity operation, deceleration, leveling, stop) are controlled primarily by a starter or bypass valve 10, a deceleration valve 11, and a non-return or check valve 12. The starter valve 10 and the check valve 12 are made in accordance with the invention. It has been found in operation that the noise generated in the up run of the elevator comes mainly from the starter valve 10 and in the descent from the non-return valve 12.

The following will be a description by way of example only and with reference to Figure 3, 4 and 5 of the functioning of the power unit, which description shall in no way limit the scope of protection of the invention in that modified valves may evidently be used in a different power unit.

When the elevator is ascending, there is a first bypass phase, during which power is supplied to the motor 4 and a solenoid 13. The solenoid 8 is not energized, and the control valve 7 is open.

Power is supplied to the motor 4, sending oil from the tank 5 to the valve block 6. A valve 15 opens, and the valve 10 opens since the oil containing chamber 17 thereof discharges into the tank 5 through the open control valve 7, and the oil recirculates from the pump 3 to the tank 5.

Solenoid 13 is then energized, creating low pressure that allows a valve 18 to open; the oil contained in chamber 19 of the valve 18 is discharged into the tank 5 via the solenoid 13.

To increase the duration of the bypass, adjustments may be made to the control valve 7 to reduce the diameter of a throttle 20.

When the elevator is accelerating while ascending, power is supplied to the motor 4 as well as to the solenoid 13. Power is not supplied to the solenoid 8, and the control valve 7 is closed.

The oil from the pump 3 passes through a passage 21 and closes the valve 7; the oil passes through an adjustable throttle 20 and reaches the chamber 17 of the valve 10. Then the valve 10 begins to close and pressurizes the valve unit 6. In this condition, the oil continues to partially circulate to the tank through the valve 7, and more particularly circulates through slots 32 in the valve body.

As the pressure increases, the valve 12 opens, the pressure of the oil overcoming the spring force of the valve and the pressure of the equipment. The oil then reaches the piston 9 and the system starts to accelerate.

To increase acceleration of the elevator while it is ascending, the adjustment screws on the throttle 20 may be loosened.

In constant-velocity operation while ascending, power is supplied to the motor 4, as well as to the solenoid 13. The solenoid 8 is not energized, the control valve 7 is closed, and the solenoid 14 is energized. The control valve 7 or solenoid 14 maintains the chamber 17 of the valve 10 under pressure such that the valve 10 completely closes, and the oil no longer circulates back to the tank 5. The valve 18 and the valve 12 completely open so that the oil moves toward the piston 9 without hindrance. It will be noted that the valve body 12 has a plurality of relatively small holes 33 and a number (6) of larger holes 34 at one end. These holes allow the passage of the full hydraulic flow without pressure drop. The valve body 12 may, however be constructed without these larger holes 34 in certain cases.

To decrease speed while ascending or descending, adjustment is provided by tightening screws 23 on the valve 18.

When decelerating while ascending, power is supplied to the motor 4, the solenoid 13 is not energized, the solenoid 8 is not energized, the control valve 7 is closed. As the solenoid 13 is de-energized, oil passes through it towards the chamber 19 of valve 18 so as to close the valve 18. The valve 10 then starts to open due to increasing pressure, and some of the oil is discharged through the valve 10 into tank 5, which causes the system to begin to decelerate.

To increase deceleration while ascending (and also descending), the screw 25 may be loosened.

During leveling speed while ascending, power is supplied to the motor 4, and the solenoid 13 is not energized, the solenoid 8 is not energized, the control valve 7 is closed.

The valve 18 rests against the end of its stroke, but oil continues to circulate through the channels 50 provided in the latter; the valve 10 is partially open so that some of the oil from the pump 3 is discharged into tank 5 via the slots 32. The system proceeds to leveling speed.

To increase leveling speed while ascending (and also descending), the screw 24 is tightened.

When stopping at the floor while ascending, the motor 4 is not powered, the solenoid 13 is not energized, the solenoid 8 is not energized, and the control valve 7 is open. Due to inertia the elevator cabin continues to move upward for a few tenths of a second. Then, due to pressure on piston 9, valve 12 closes and the cabin is stopped at the floor.

During the descent phase, while accelerating, power is not supplied to the motor 4, the solenoid 13 is energized, the solenoid 8 is energized, the control valve 7 is open. Since solenoid 8 is energized, it allows the oil under pressure to move the release piston 11, thereby opening the valve 12. Solenoid 13 is energized and allows the slide valve 18 to open. Power is not supplied to control valve 7 so allowing the slide valve 10 to open, increasing the flow downward and causing the cabin to accelerate.

To increase acceleration during descent, a choke 26 arranged in the passage leading from the release piston 11 may be replaced with one that has a larger diameter, an adjustment that is recommended only in the event of irregular operation.

For constant speed during descent, the motor 4 is not powered, the solenoid 13 is energized, the solenoid 8 is energized, and the control valve 7 is open. In this state, the valve 18 and valve 10 are completely open, the valve 12 is open so as to maintain constant pressure in chamber 27; for this purpose, a solenoid 28 is provided to release any excess pressure.

To increase speed while in descent, a screw 29 must be tightened.

To decelerate while descending, the motor 4 is not powered, the solenoid 13 is not energized, the solenoid 8 is energized, and the control valve 7 is open. Since the solenoid 13 is de-energized, it causes the valve 18 and the valve 10 to shift to their closed positions, and the system begins to slow down.

To increase deceleration while descending (and also ascending), screw 25 must be loosened.

At leveling speed while in descent, the motor 4 is not powered, the solenoid 13 is not energized, the solenoid 8 is energized, and the control valve 7 is open. In this state, the valve 18 rests against the end of its stroke, but oil continues to circulate through the channels provided in the latter. The closing of valve 18 causes a drop in pressure, which causes the valve 10 also to close. Oil is then discharged into the tank more slowly and the system proceeds to leveling speed.

To increase leveling speed during descent (and ascent), the screw 24 must be tightened.

In case of stopping at a floor in descent, power is not supplied to the motor 4, the solenoid 13 is not energized, the solenoid 8 is not energized, the control valve 7 is open. Since the solenoid 8 is de-energized, it causes the oil to discharge into a chamber 30 behind the release piston 11. Discharge occurs via the throttle 26, hence valve 12 closes slowly. Valve 12 closes completely, and the system stops.

To increase the closing speed of valve 12 in descent, the throttle 26 may be replaced by one that has a smaller diameter.

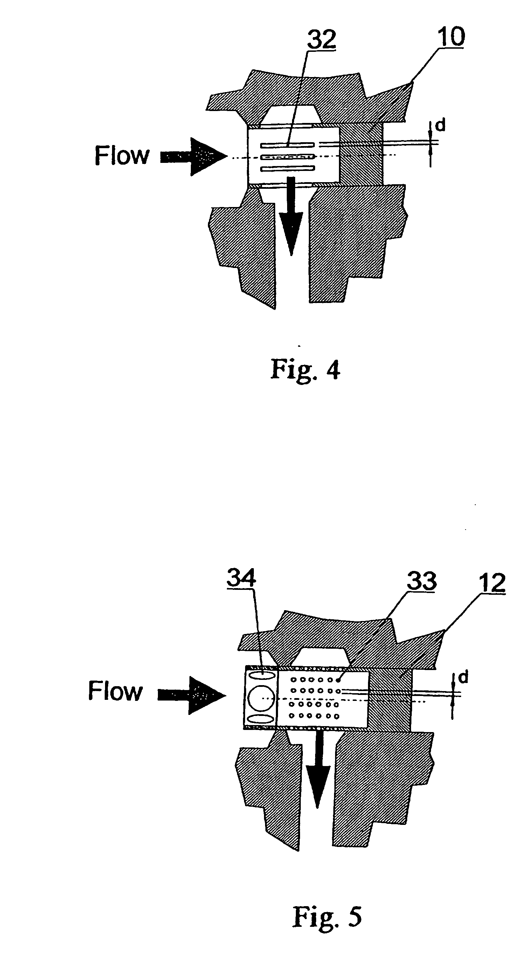

As shown schematically, in Figures 4 and 5, the valves 10 and 12 are made in such a way as to force the fluid to pass through fine holes in a wall of the valve body during certain phases of operation of the system, in particular when the valves are opening, closing or in a partially open or closed state. In Figure 4, the holes are in the form of rectangular slots 32, while in Figure 5 holes 33 are circular. The valves are generally cup shaped with the holes passing through the side walls thereof. In the case of a 30 40 mm diameter valve body, the wall thickness might typically be 2.5mm.

In the embodiment of Figure 3, the bypass valve 10 is provided with slots 32 while the check valve is provided with circular holes 33. As shown in Figure 5, the valve body 12 is provided with larger diameter holes 34 adjacent its end to allow flow of fluid therethrough in its fully open state without significant pressure losses.

Obviously, the particular form of the passageways is not limited to those shown, nor is their number. The advantage of passing flow through relatively small holes 32 or 33 is that the fluid at valve 15 has a lower Reynolds number X and, therefore, along with a cavitation number κ, the probability of the onset of cavitation itself is reduced, with a resulting drop in noise. The type of valve 10, 12 will vary, however, in regard to the number and form of the holes, with the function of the flow rate of the pump 3. Typical values for rectangular holes and circular holes in bypass and check spool valves 10,12 are given in Tables 1 and 2 below.

**TABLE 1**

| Pump Flow Rate (1 min⁻¹) | Number of Slots (20 mm long) | Slot Width (mm) |
|---|---|---|
| 50-75 | 4 | 2 |
| 76-121 | 4 | 2 |
| 122-146 | 4 | 3 |
| 147-191 | 4 | 4 |
| 192-247 | 4 | 4 |
| - 40 mm diameter by pass spool valve | | |

**TABLE 2**

| Pump Flow Rate (1 min⁻¹) | Number of Holes | Hole diameter (mm) |
|---|---|---|
| 50-75 | 70 | 1.2 |
| 76-121 | 70 | 1.2 |
| 122-146 | 58 | 1.5 |
| 147-191 | 58 | 1.5 |
| 192-247 | 58 | 1.7 |
| 40 mm diameter check valve spool | | |

The above values are determined by specific studies and verified empirically to give optimum noise reduction while not compromising the hydraulic performance of the apparatus but bearing in mind the technical flexibility of the hole sizes. For example at high flow rates too small a hole diameter, whilst being quiet, may lead to jerkiness in the elevator movement.

Furthermore, the valves 10, 12 are made with thin walls, so as to reduce temperature-dependent variations in the viscosity of the oil.

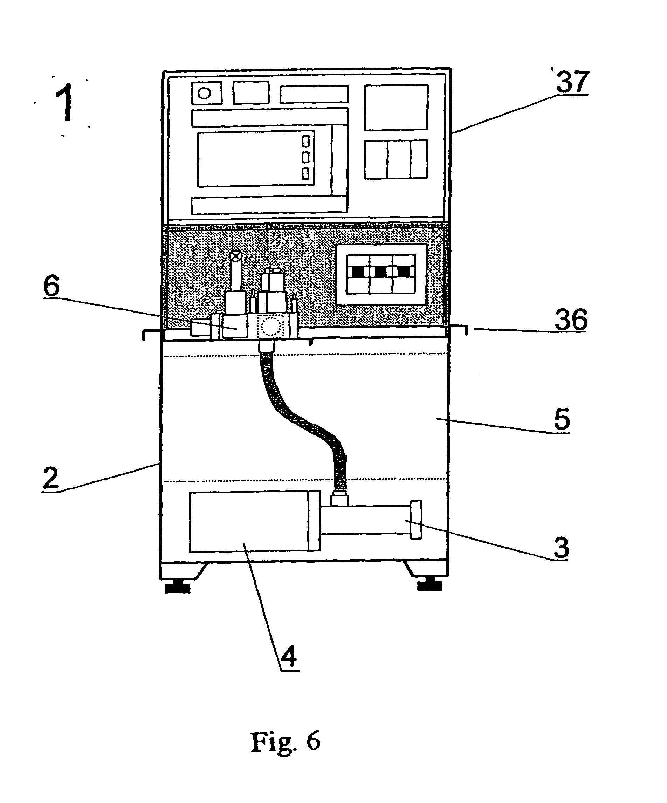

Finally, with reference to Figure 6, the power unit 1 is shown with a soundproof compartment 36 in which is housed valve unit 6, said compartment 36 being covered with padded sheets of sound-absorbing or sound-insulating material, so as to further reduce the noise of the hydraulic power unit. The compartment 36 may be provided with an inspection panel to allow access to the valve unit 6.

Resting on top of compartment 36 is electric panel 37, which in known hydraulic power units is placed elsewhere in the machine.

The present invention was described only by way of illustration according to its preferred embodiment and is not limited thereto; it is understood that the expert in the field may vary and/or modify it without thereby exceeding the scope of its protection as defined in the attached claims. For example, instead of the control valve 7 controlling the bypass valve 10, a solenoid could be provided.

## Claims

1. A hydraulic power unit for an elevator or other hoist, the hydraulic power unit (1) including a tank (5), a pump (3) and a valve block (7) having a plurality of spool valves (10;12) to selectively control the flow the hydraulic fluid between a piston (9) and the tank (5), **characterized by**
each of the spool valves having a cup shaped body with a thin side wall including a plurality of small apertures (32; 33; 34) therein for the passage of hydraulic fluid.

2. The hydraulic power unit according to claim 1, wherein the plurality of spool valves includes a bypass valve (10) with a plurality of apertures (32) having the form of substantially rectangular slots.

3. The hydraulic power unit according to claim 2, wherein the slots have a width of up to 7 mm.

4. The hydraulic power unit according to claim 3, wherein the slots have a width of between 1 and 5 mm.

5. The hydraulic power unit according to claim 4, wherein the slots have a width of beteween 2 an 4 mm.

6. The hydraulic power unit according to any preceding claim, wherein the plurality of spool valves includes a check valve (12) with a plurality of apertures (33; 34) having circular shape.

7. The hydraulic power unit according to claim 6, wherein the apertures have a diameter of up to 5 mm.

8. The hydraulic power unit according to claim 7, wherein the apertures have a diameter of between 1 and 3 mm.

9. The hydraulic power unit according to claim 7, wherein the apertures have a diameter of between 1.2 and 1.7 mm.

10. The hydraulic power unit according to any preceding claim, further including a soundproof compartment (36) in which the control valve is housed.

11. The hydraulic power unit according to claim 6, wherein the soundproof compartment includes sheets of sound absorbing or sound insulating material.

12. The hydraulic power unit according to any preceding claim, wherein the sidewalls have a thickness of about 2.5 mm.

13. The hydraulic power unit according to any preceding claim , wherein the plurality of spool valves includes at least one spool valve (12) having a side wall with a plurality of varying sized apertures (33; 34) arranged such that the larger apertures are adjacent one end of the spool.

## Patentansprüche

1. Hydraulikleistungseinheit für einen Aufzug oder ein anderes Hebezeug, wobei die Hydraulikleistungseinheit (1) einen Tank (5), eine Pumpe (3) und einen Ventilblock (7) mit einer Mehrzahl von Kolbenventilen (10; 12) aufweist, um den Fluss des Hydraulikfluids zwischen einem Kolben (9) und dem Tank (5) selektiv zu steuern,
**dadurch gekennzeichnet, dass** jedes der Kolbenventile einen becherförmigen Körper mit einer dünnen Seitenwand hat, die eine Mehrzahl von kleinen Öffnungen (32; 33; 34) darin für den Durchgang von Hydraulikfluid aufweist.

2. Hydraulikleistungseinheit nach Anspruch 1, wobei die Mehrzahl von Kolbenventilen ein Bypassventil (10) mit einer Mehrzahl von Öffnungen (32), die die Form von im Wesentlichen rechteckigen Schlitzen haben, aufweist.

3. Hydraulikleistungseinheit nach Anspruch 2, wobei die Schlitze eine Breite von bis zu 7 mm haben.

4. Hydraulikleistungseinheit nach Anspruch 3, wobei die Schlitze eine Breite von zwischen 1 und 5 mm haben.

5. Hydraulikleistungseinheit nach Anspruch 4, wobei die Schlitze eine Breite von zwischen 2 und 4 mm haben.

6. Hydraulikleistungseinheit nach einem der vorangehenden Ansprüche, wobei die Mehrzahl von Kolbenventilen ein Rückschlagventil (12) mit einer Mehrzahl von Öffnungen (33; 34) mit kreisförmiger Form aufweisen.

7. Hydraulikleistungseinheit nach Anspruch 6, wobei die Öffnungen einen Durchmesser von bis zu 5 mm haben.

8. Hydraulikleistungseinheit nach Anspruch 7, wobei die Öffnungen einen Durchmesser von zwischen 1 und 3 mm haben.

9. Hydraulikleistungseinheit nach Anspruch 7, wobei die Öffnungen einen Durchmesser von zwischen 1,2 und 1,7 mm haben.

10. Hydraulikleistungseinheit nach einem der vorangehenden Ansprüche, ferner aufweisend ein schalldämpfendes Abteil (36), in dem das Steuerventil aufgenommen ist.

11. Hydraulikleistungseinheit nach Anspruch 6, wobei das schallgedämpfte Abteil Schichten aus schallabsorbierendem oder schallisolierendem Material aufweist.

12. Hydraulikleistungseinheit nach einem der vorangehenden Ansprüche, wobei die Seitenwände eine Dicke von etwa 2,5 mm haben.

13. Hydraulikleistungseinheit nach einem der vorangehenden Ansprüche, wobei die Mehrzahl von Kolbenventilen mindestens ein Kolbenventil (12) aufweist mit einer Seitenwand mit einer Mehrzahl von Öffnungen (33, 34) variierender Größe, die derart angeordnet sind, dass die größeren Öffnungen einem Ende des Kolbens benachbart sind.

## Revendications

1. Unité de puissance hydraulique pour un ascenseur ou autre élévateur, l'unité de puissance hydraulique (1) comprenant un réservoir (5), une pompe (3) et une boîte à soupapes (7) ayant une pluralité de distributeurs à tiroirs cylindriques (10, 12) pour commander de manière sélective l'écoulement du fluide hydraulique entre un piston (9) et le réservoir (5), **caractérisée en ce que** chacun des distributeurs à tiroirs cylindriques présente un corps en forme de coupelle avec une mince paroi latérale comprenant une pluralité de petites ouvertures (32 ; 33 ; 34) à l'intérieur pour le passage du fluide hydraulique.

2. Unité de puissance hydraulique selon la revendication 1, dans laquelle la pluralité de distributeurs à tiroirs cylindriques comprend une soupape de dérivation (10) avec une pluralité d'ouvertures (32) ayant la forme de fentes sensiblement rectangulaires.

3. Unité de puissance hydraulique selon la revendication 2, dans laquelle les fentes ont une largeur jusqu'à 7 mm.

4. Unité de puissance hydraulique selon la revendication 3, dans laquelle les fentes ont une largeur entre 1 et 5 mm.

5. Unité de puissance hydraulique selon la revendication 4, dans laquelle les fentes ont une largeur entre 2 et 4 mm.

6. Unité de puissance hydraulique selon l'une quelconque des revendications précédentes, dans laquelle la pluralité de distributeurs à tiroirs cylindriques comprend un clapet de retenue (12) avec une pluralité d'ouvertures (33 ; 34) ayant une forme circulaire.

7. Unité de puissance hydraulique selon la revendication 6, dans laquelle les ouvertures ont un diamètre jusqu'à 5 mm.

8. Unité de puissance hydraulique selon la revendication 7, dans laquelle les ouvertures ont un diamètre entre 1 et 3 mm.

9. Unité de puissance hydraulique selon la revendication 7, dans laquelle les ouvertures ont un diamètre entre 1,2 et 1,7 mm.

10. Unité de puissance hydraulique selon l'une quelconque des revendications précédentes, comprenant en outre un compartiment insonorisé (36) dans lequel la soupape de commande est logée.

11. Unité de puissance hydraulique selon la revendication 6, dans laquelle le compartiment insonorisé comprend des feuilles de matériau absorbant ou isolant acoustique.

12. Unité de puissance hydraulique selon l'une quelconque des revendications précédentes, dans laquelle les parois latérales ont une épaisseur d'environ 2,5 mm.

13. Unité de puissance hydraulique selon l'une quelconque des revendications précédentes, dans laquelle la pluralité de distributeurs à tiroirs cylindriques comprend au moins un distributeur à tiroir cylindrique (12) présentant une paroi latérale avec une pluralité d'ouvertures de tailles variées (33 ; 34) disposées de telle sorte que les plus grandes ouvertures soient adjacentes à une extrémité du distributeur.
